Europäisches Patentamt

European Patent Office

Office européen des brevets

(19)

(11) Publication number: **0 383 622**
**A2**

# EUROPEAN PATENT APPLICATION

(12)

(21) Application number: 90301713.5

(22) Date of filing: **16.02.90**

(51) Int. Cl.⁵: **B01D 29/33, B01D 29/35,
B01D 29/54, B01D 29/86**

(30) Priority: **16.02.89 ZA 891220**

(43) Date of publication of application:
**22.08.90 Bulletin 90/34**

(84) Designated Contracting States:
**AT BE CH DE DK ES FR GB GR IT LI LU NL SE**

(71) Applicant: **TOM HOLDINGS LIMITED
5 New Street
St. Hélier Jersey Channel Island(GB)**

(72) Inventor: **Du Plessis, Jan Abraham
4 Kameel Street
Bronkhorstspruit, Transvaal Province(ZA)**

(74) Representative: **Barlow, Roy James et al
J.A. KEMP & CO. 14, South Square, Gray's
Inn
London WC1R 5EU(GB)**

(54) **Filtration process.**

(57) Filtration apparatus 10 comprises a cylindrical sieve member 12 having an inlet 16 for a suspension as well as a concentrated stream or effluent outlet 20 spaced from the inlet. A deflector 22 is located with peripheral clearance within the cylindrical sieve member, between the inlet and outlet, and adapted to deflect a suspension passing along the sieve member from its inlet to its outlet outwardly against the sieve member. The invention also provides a filtration process.

EP 0 383 622 A2

THIS INVENTION relates to a filtration process. It relates also to filtration apparatus.

According to a first aspect of the invention, there is provided a filtration process, which comprises

passing a suspension of solid matter in a carrier liquid under pressure into a filtration zone;

allowing liquid to pass through a filtration medium in the filtration zone, to a zone of lower pressure; and

withdrawing a more concentrated solids - containing stream under reduced pressure from the filtration zone.

The process may include allowing some solid matter to accumulate as a layer against the filtration medium, so that the layer of accumulated solid matter acts as an additional filtration medium through which the liquid must pass; and maintaining the layer of accumulated solid matter at a predetermined thickness. The process may also include adding a flocculant to the suspension upstream of the filtration zone.

Hence, clarified liquid will pass through the layer of accumulated solid matter and the filtration medium, with the more concentrated solids-containing stream, ie a liquid stream containing a higher proportion or concentration of suspended solid matter, passing from the filtration zone. The influent stream or suspension may be a waste water stream typically containing from 0.01 to 50%, eg 0.5 to 2%, by mass suspended solid matter, with the concentrated effluent or outgoing stream typically containing from 5 to 80%, eg 20 to 25%, by mass solid matter.

The filtration medium may be a cylindrical sieve, with the suspension passing along the inside of the sieve in an axial direction from an inlet end thereof to an outlet end thereof and being urged outwardly by a deflector located with peripheral clearance within the sieve.

The process may include continually removing excess solid matter from the accumulated layer, thereby to maintain the layer at said predetermined or constant thickness. The thickness of this layer may be maintained at between 0.2 and 2 cm, eg between 0.5 and 1 cm. The maintenance of the layer thickness may, in one embodiment of the invention, be effected by rotating the deflector about an axis extending coaxially with the sieve axis, and scraping off excess solid matter by means of a protruding deflection member. In another embodiment of the invention, the maintenance of the layer thickness may be effected by rotating at least one deflection member, located between the deflector and the sieve member, about an axis extending parallel to the sieve axis. The deflector may then also be in the form of a cylindrical sieve so that clarified water passes radially outwardly through the outer sieve member as well as radially inwardly through the inner sieve member, with solid matter accumulating in a layer on both sieve members.

The process may also include passing the effluent through at least one further similar sieve member, to increase the concentration of solid matter in the fluid. The deflector of the further sieve member may be as hereinbefore described, or may be of stationary bullet shape.

The cylindrical member may be horizontally or vertically disposed, or at an inclination to the horizontal.

The influent suspension may enter the filtration zone at a pressure of between 1 and 10 bar (g), typically between 2 and 5 bar (g), eg about 3 bar (g), so that there is a pressure drop of about 1 to about 10 bar available along the sieve interior as well as across or through the sieve and the solids layer. However, the effluent or solids containing stream will normally exit the sieve or the filtration zone at a positive pressure, eg 0.5-9.0 bar (g). The zone of lower pressure to which the clarified liquid passes can either be a positive pressure, eg 1.0-1.5 bar (g), or a negative pressure or vacuum.

According to a second aspect of the invention, there is provided filtration apparatus which comprises

a cylindrical sieve member having an inlet for a suspension as well as a concentrated stream or effluent outlet spaced from the inlet;

at least one deflector located with peripheral clearance within the cylindrical sieve member, between the inlet and outlet, and adapted to deflect a suspension passing along the sieve member from its inlet to its outlet outwardly against the sieve member.

In use, liquid containing suspended matter, ie the influent, enters the inlet of the sieve member and is deflected outwardly by the deflector towards the sieve member. Clarified liquid passes through the sieve member while some solid matter can accumulate as a layer, which acts as an additional sieve or filtration means, against the inside of the sieve member. An effluent stream, containing a higher concentration of solid matter, exits via the outlet.

In one embodiment of the invention, the deflector may be of bullet shape, with the bullet apices being directed towards the inlet and outlet. The bullet may be located axially within the sieve member, and may be fixedly mounted therein.

In another embodiment of the invention, the deflector may be rotatable about an axis which is coaxial with the sieve member axis. The apparatus will then include drive means for driving the deflector to rotate. The deflector may include a cylindrical core and a plurality of deflection members protruding outwardly, eg radially outwardly from the core. The lengths of the deflection members may be such that they terminate a predetermined distance from the sieve member so that a layer of solids will, in use, deposit against the sieve member, with the thickness of the solids layer being the same as said predetermined distance. The deflection members or blades may be of planar form, with their planes extending in the direction of the sieve member axis, or at an angle thereto. They may be spaced apart longitudinally and may be arranged in staggered configuration to define a spiral or helix around the core. Instead, the deflector may comprise a cylindrical core and at least one deflection member protruding outwardly from the core and arranged in spiral or helical fashion about the core.

In yet another embodiment of the invention, the deflector may comprise a stationary cylindrical inner sieve member located with peripheral clearance within the outer sieve member, with the ends of the outer sieve member being closed off, and a conduit leading from the inside of the inner sieve member through the outer sieve member. The apparatus may then include a stirrer for agitating fluid passing between the sieves. The stirrer may comprise a plurality of deflection or stirrer members or blades spaced apart along or around a mounting member, and drive means for driving the mounting member to move along the annular gap or space between the sieve members. In particular, a pair of the mounting members, each provided with a number of the stiffer blades, may be provided, with the mounting members being spaced 180° apart and being connected to a shaft extending along the axis of the sieve members, and with the shaft being driven to rotate by the drive means.

The apparatus may include pump means operatively connected to the sieve member inlet so that the suspension can be pumped under pressure into the sieve member.

The invention will now be described by way of example, with reference to the accompanying diagrammatic drawings.

In the drawings,

FIGURE 1 shows a longitudinal sectional view of filtration apparatus according to one embodiment of the second aspect of the invention;

FIGURE 2 shows a sectional view through II-II in Figure 1; and

FIGURE 3 shows a longitudinal sectional view of filtration apparatus according to another embodiment of the second aspect of she invention.

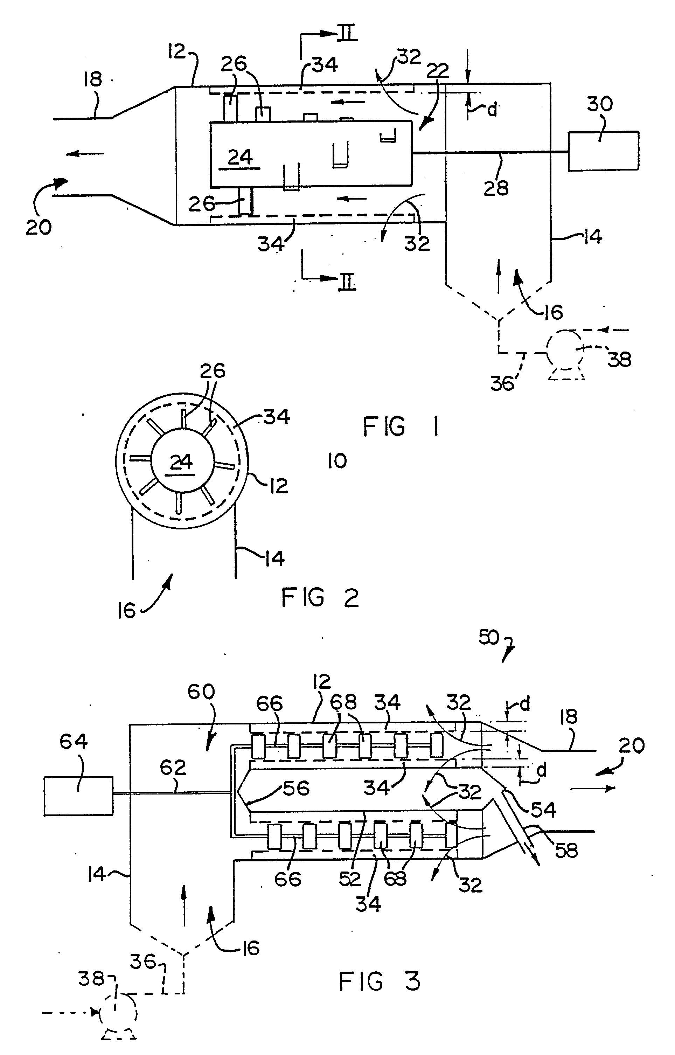

Referring to Figures 1 and 2, reference numeral 10 generally indicates filtration apparatus according to one embodiment of the second aspect of the invention.

The apparatus 10 includes a cylindrical sieve member 12. The sieve member 12 is foraminous or apertured, eg meshed. Typically, the size of the apertures thereof can be between 30 and 1000 microns, eg about 200 microns.

To an inlet end of the sieve member 12 is connected a housing 14 defining an inlet 16. A conduit 36, fitted with a pump 38, is operatively connected to the inlet. To an outlet end of the sieve member 12 is attached a flared or tapered casing 18 defining an outlet 20.

The apparatus 10 also includes a deflector, generally indicated by reference numeral 22, located with peripheral clearance within the sieve member 12. The deflector 22 comprises a cylindrical core 24 from which protrudes a plurality of deflection or stirrer plates or blades 26. The planes of the stirrer plates 26 extend at an angle of between 0 and 86°, eg about 45°, to the axis of the core 24. The plates 26 are spaced longitudinally and circumferentially apart, and are arranged in helical or screw fashion about the core 24. The length of the plates 26, ie the distance which they protrude from the core 24, is such that there is a gap 'd' between their outermost edges and the inner surface of the sieve member 12. The blades 26 protrude radially outwardly from the core 24. The width of the gap 'd' can be between 5 and 10 mm. Instead of, or in addition to, the plates 26, an elongate protruding strip (not shown), arranged in helical or screw fashion about the core 24, can be provided.

The deflector 22 is fitted with an axially extending drive shaft 28 which leads to an electric motor 30. hence, the electric motor 30 can drive the deflector 22 to rotate via the shaft 28.

In use, waste water containing between 0,5 and 2% suspended solid matter and to which can be added a flocculant, if desired, is pumped into the inlet 16 at a pressure of about 3 bar. It hence passes in an axial direction along the inside of the sieve member 12. As the deflector 22 rotates, it deflects the water and sludge consisting of suspended solid matter outwardly, so that some water passes, as clarified water, through the apertures in the sieve, as indicated by arrows 32, into a zone of lower pressure. As the water passes through the apertures of the sieve member 12, solid matter suspended therein is separated out and accumulates against the inside of the sieve 12 as a layer 34 which acts as an additional filtration means by assisting in filtering fine matter from the water. The thickness 'd' of the layer 34 is hence 5 to 10 mm, and this ensures good filtration of fine matter from the water while achieving satisfactory clarified water throughput at the available pressure differential of 2 to 2.5 bar (g).

A concentrated stream, typically containing between 20 and 25% solid matter, passes from the apparatus 10 via the outlet 20 at a pressure of about 0.5-5.0 bar (g).

Typically, the deflector 22 is driven to rotate at a speed of between 25 and 3 rpm, eg about 8 rpm. The diameter of the sieve member 12 may be about 0.3 m, with its length typically being about 1 m. The diameter of the core 24 may be about 0.2 m, with the width of the blades or plates 26 being about 0.1 m.

Referring to Figure 3, reference numeral 50 generally indicates filtration apparatus according to another embodiment of the second aspect of the invention.

Parts of the apparatus 50 which are the same or similar to those of the apparatus 10 hereinbefore described with reference to Figures 1 and 2, are indicated with the same reference numerals.

The apparatus 50 includes an inner cylindrical sieve member 52 located with peripheral clearance within the outer sieve member 12. Conical-shaped end members 54, 56 close off the respective ends of the sieve member 52, with the end member 54 facing the outlet 20. A water outlet 58 leads from the end member 54 through the housing 14 for withdrawing clarified water also from the inside of the sieve member 52.

The apparatus 50 also includes a stirrer, generally indicated by reference numeral 60. The stirrer 60 includes an axially extending shaft 62, with the shaft 62 being driven to rotate by means of an electric motor 64 located outside the housing 14. To the inner end of the shaft 62 are mounted one or more, typically two, elongate mounting members 66, with the mounting members being spaced apart. They may be spaced equidistantly apart. Hence, when two mounting members are provided, they can be spaced 180° apart. Mounted to the mounting members 66 are stirrer plates 68. The plates 68 are of planar form and lie in the same plane, which extends through the axis of the sieve member 12 when the mounting members 66 are viewed end-on. The lengths of the plates 68 are such that their ends are spaced a distance 'd', as hereinbefore defined, from the sieves 12, 52. The blades 68 of the one mounting member 66 are staggered longitudinally with respect to those of the other mounting member 66, and the blades on each mounting member are spaced a blade width apart.

In use, as the influent stream passes along the cylindrical sieve members 12, 52, layers 34 of solid matter will be deposited on both sieves, with clarified water passing outwardly through the outer sieve member 12 and inwardly through the inner sieve member 52.

If desired, one or more of the apparatus 10, 50 may be connected in series so as to obtain an eventual effluent stream having a desired degree of concentration of solid matter therein. When a plurality of apparatus 10, 50 are connected in series, the deflector 22 and sieve 52/stirrer 60 of at least one of the units can be replaced by a bullet-shaped deflector (not shown), with the apices of the bullet facing in the direction of the inlet 16 and the outlet 20.

The Applicant believes that with the apparatus 10, 50, even deposition of solid matter on the sieves is achieved, which promotes good filtration. In addition, with the apparatus 10, 50, very fine solids, even those which are less than 50 microns, can be achieved due to the additional sieve layer deposited on the sieves.

## Claims

1. A filtration process, characterized in that it comprises
passing a suspension of solid matter in a carrier liquid under pressure into a filtration zone;
allowing liquid to pass through a filtration medium in the filtration zone, to a zone of lower pressure; and
withdrawing a more concentrated solids - containing stream under reduced pressure from the filtration zone.

2. A process according to Claim 1, characterized in that the influent suspension is waste water containing from 0,01 to 50% suspended solid matter, with the method including adding a flocculant to the suspension upstream of the filtration zone.

3. A process according to Claim 1 or Claim 2, characterized in that it includes allowing some solid matter to accumulate as a layer against the filtration medium, so that the layer of accumulated solid matter acts as an additional filtration medium through which the liquid must pass; and maintaining the layer of accumulated solid matter at a predetermined thickness.

4 A process according to Claim 3, characterized in that the filtration medium is a cylindrical sieve, with the suspension passing along the inside of the sieve in an axial direction from an inlet end thereof to an outlet end thereof and being urged outwardly by a deflector located with peripheral clearance within the sieve, the process including continually removing excess solid matter from the accumulated layer, so as to maintain the layer at a constant thickness of between 0,2 and 2 cm.

5. A process according to any one of Claims 1 to 4 inclusive, characterized in that the influent suspension enters the filtration zone at a pressure of between 1 and 10 bar (g).

6. Filtration apparatus characterized in that it comprises
a cylindrical sieve member having an inlet for a suspension as well as a concentrated stream or effluent outlet spaced from the inlet;

at least one deflector located with peripheral clearance within the cylindrical sieve member, between the inlet and outlet, and adapted to deflect a suspension passing along the sieve member from its inlet to its outlet outwardly against the sieve member.

7. Apparatus according to Claim 6, characterized in that the deflector is of bullet shape, with the bullet apices being directed towards the inlet and outlet and the bullet being located axially within the sieve member.

8. Apparatus according to Claim 6, characterized in that the deflector is rotatable about an axis which is coaxial with the sieve member axis, the apparatus then including drive means for driving the deflector to rotate, and the deflector including a cylindrical core and a plurality of deflection members protruding outwardly from the core, with the lengths of the deflection members being such that they terminate a predetermined distance from the sieve member so that a layer of solids will, in use, deposit against the sieve member, with the thickness of the solids layer being the same as said predetermined distance.

9. Apparatus according to Claim 6, characterized in that the deflector comprises a stationary cylindrical inner sieve member located with peripheral clearance within the outer sieve member, with the ends of the outer sieve member being closed off, and a conduit leading from the inside of the inner sieve member through the outer sieve member, and the apparatus including a stiffer for agitating fluid passing between the sieves.

10. Apparatus according to any one of Claims 6 to 9 inclusive, chracterized in that it includes pump means operatively connected to the sieve member inlet so that the suspension can be pumped under pressure into the sieve member.

FIG 1

10

FIG 2

FIG 3